# EUROPEAN PATENT SPECIFICATION

(11) **EP 2 586 653 B1**
(45) Date of publication and mention of the grant of the patent: **22.10.2014**
(21) Application number: 11797905.4
(22) Date of filing: 20.04.2011
(51) Int. Cl.: B60N 2/50, B60N 2/00, B60N 2/68, B60N 2/015

(54) **VEHICLE SEAT MOUNTING STRUCTURE**
MONTAGESTRUKTUR FÜR EINEN FAHRZEUGSITZ
STRUCTURE DE MONTAGE POUR SIÈGE DE VÉHICULE

(30) Priority: 22.06.2010 JP 2010141466
(43) Date of publication of application: 01.05.2013
(73) Proprietor: Toyota Boshoku Kabushiki Kaisha, Kariya-shi, Aichi 448-8651 (JP); Toyota Shatai Kabushiki Kaisha, Kariya-shi Aichi 448-0002 (JP)
(72) Inventor: IMAJYO Taku, Kariya-shi Aichi 448-8651 (JP); OGISO Fukuo, Kariya-shi Aichi 448-8651 (JP); SUGAMA Takahiro, Kariya-shi Aichi 448-0002 (JP); MUTOU Hirofumi, Kariya-shi Aichi 448-0002 (JP)
(74) Representative: Winter, Brandl, Fürniss, Hübner, Röss, Kaiser, Polte - Partnerschaft mbB
(86) International application number: PCT/JP2011/059699
(87) International publication number: WO 2011/162017

(56) References cited:
- EP-A1- 1 930 209
- EP-A1- 2 136 102
- EP-A2- 1 905 639
- DE-A1-102006 060 829
- JP-A- 6 016 073
- JP-U- 58 171 729
- JP-U- 58 171 729
- US-A1- 2008 284 005

## Description

### TECHNICAL FIELD

The present invention relates to a vehicle seat mounting structure.

### BACKGROUND ART

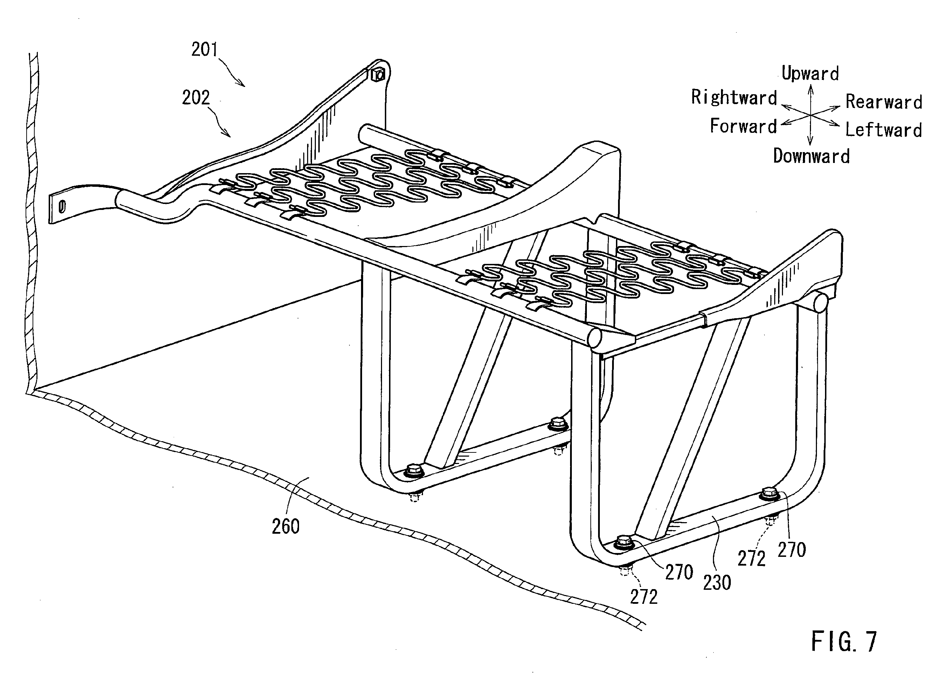

As shown in FIGS. 7 to 9, a vehicle seat mounting structure for a vehicle seat 201 (e.g., a right rear seat of a van type vehicle) has already been known. In the structure, legs 230 are secured to a seat cushion 202. Each of the legs 230 is formed as a substantially rectangular tube by four walls of a first wall 240, a second wall 242, a third wall 244 and a fourth wall 246. The first wall 240 facing a vehicle floor 260 and the second wall 242 facing the first wall 240 are fastened together to the vehicle floor 260 via bolts 270 and nuts 272. Further, substantially tubular metal bushes 250 are positioned in each of the legs 230 such that the bolts 270 can be inserted thereinto. Thus, even if the bolts 270 and the nuts 272 are tightly fastened, each of the legs 230 can be prevented from being crushed. Therefore, mounting strength of the vehicle seat 201 can be increased.

Additionally, Japanese Laid-Open Patent Publication No. 2006-315540 is known as a prior art document containing information related to the invention of this application.

Furthermore, document JP 58 171729 U discloses a vehicle seat mounting structure according to the preamble of claim 1.

### SUMMARY OF THE INVENTION

### PROBLEMS TO BE SOLVED BY THE INVENTION

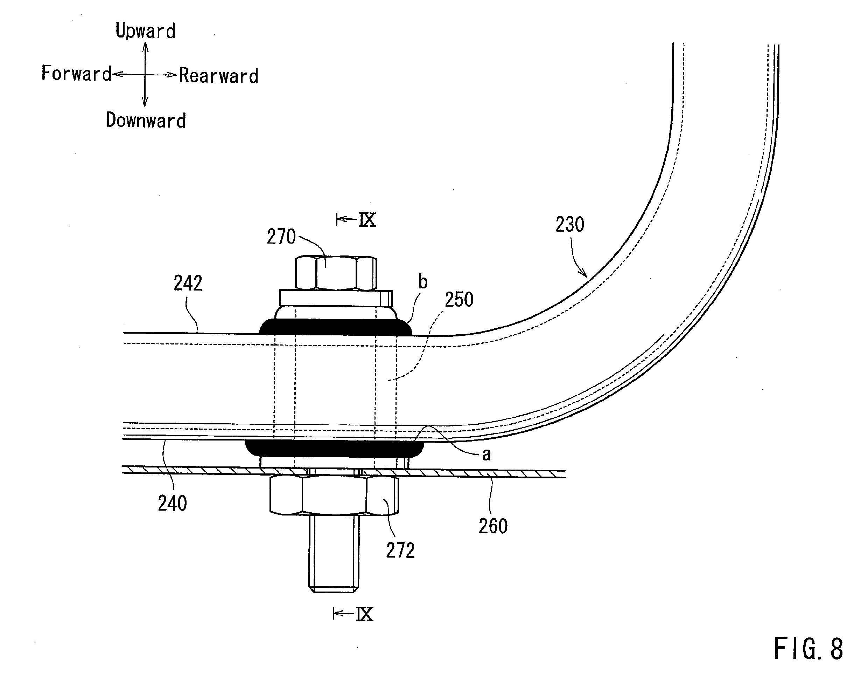

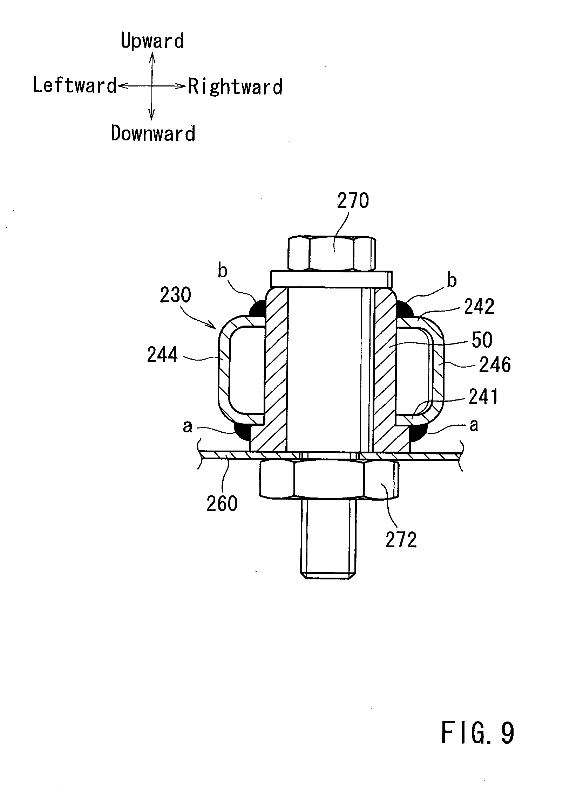

However, as shown in FIGS. 8 and 9, in the known technique described above, the bushes 250 are arranged so as to penetrate the legs 230 in an inserting direction of the bolts 270. Thus, each of the bushes 250 may have two welding portions bonding the bushes 250 to the legs 230 (i.e., a welding portion between one axial end of each of the bushes 250 and the first wall 240 of each of the legs 230, and a welding portion between the other axial end of each of the bushes 250 and the second wall 242 of each of the legs 230, which welding portions are respectively shown by a and b in FIG. 8 and 9). However, the latter welding portion (the welding portion shown by b in FIGS. 8 and 9) may be exposed. This may lead to an inferior appearance of each of mounting portions of the vehicle seat 201.

The present invention has been made in order to solve the problems described above. Accordingly, it is an object of the present invention to provide a structure in which when a leg is fastened together to the vehicle floor via bolts and nuts in order to mount a vehicle seat on a vehicle floor, the leg can be prevented from being crushed without deteriorating an appearance of each of mounting portions.

The object is solved by the features of independent claim 1. The dependent claims are directed to preferred embodiments of the invention.

The present invention provides a vehicle seat mounting structure in which a leg is secured to a seat cushion and is formed as a substantially rectangular tube by four walls of a first wall, a second wall, a third wall and a fourth wall, in which the first wall facing a vehicle floor and the second wall facing the first wall are fastened together to the vehicle floor via a bolt and a nut, and in which a substantially tubular metal bush capable of preventing the leg from being crushed by the fastening-together action is positioned in the leg such that the bolt can be inserted thereinto, wherein the bush has a flange that is formed in a periphery of one axial end thereof, wherein the flange is interleaved between the first wall of the leg and the vehicle floor, and wherein the second wall of the leg is interleaved between a head portion of the bolt and the other axial end of the bush.

According to this structure, when the leg and the vehicle floor are fastened together via the bolt and the nut, a fastening force is exerted on the second wall of the leg, the bush and the vehicle floor. As a result, as described in connection with a conventional structure, the leg can be prevented from being crushed even if the bolt and the nut are tightly fastened, so that mounting strength of a vehicle seat can be increased. At this time, the other axial end side of the bush contacts an inner surface of the second wall of the leg. Therefore, in order to secure the bush to the leg, only a single welding portion is necessary. Thus, unlike the conventional structure, the welding portion can be prevented from being exposed. As a result, an appearance of each of mounting portions of the vehicle seat can be prevented from being reduced.

Further, the flange of the bush and the first wall of the leg may be bonded to each other by welding.

According to this structure, the vehicle seat can be mounted on the vehicle floor while the bush is secured to the leg. Thus, as compared with a case in which such securing is not effected, workability of mounting can be increased.

### BRIEF DESCRIPTION OF THE DRAWINGS

FIG. 1 is a perspective view of a vehicle seat mounting structure for a right rear seat according to Embodiment 1 of the present invention.
FIG. 2 is a side view of a main portion of FIG. 1.
FIG. 3 is a sectional view taken along line III-III of FIG. 2.
FIG. 4 is a perspective view of a vehicle seat mounting structure for a right rear seat according to Embodiment 2 of the present invention.
FIG. 5 is a side view of a main portion of FIG. 4.
FIG. 6 is a sectional view taken along line VI-VI of FIG. 5.
FIG. 7 is a perspective view of a conventional vehicle seat mounting structure for a right rear seat.
FIG. 8 is a side view of a main portion of FIG. 7.
FIG. 9 is a sectional view taken along line IX-IX of FIG. 8.

### MODE FOR CARRYING OUT THE INVENTION

In the following, a mode for carrying out the present invention will be described with reference to the drawings. In the following description, "a right rear seat 1" of a van type vehicle will be exemplified as "a vehicle seat." Further, upward and downward, forward and backward, and rightward and leftward in the description respectively correspond to upward and downward, forward and backward, and rightward and leftward in the drawings described above, i.e., upward and downward, forward and backward, and rightward and leftward with respect to the right rear seat 1.

### (Embodiment 1)

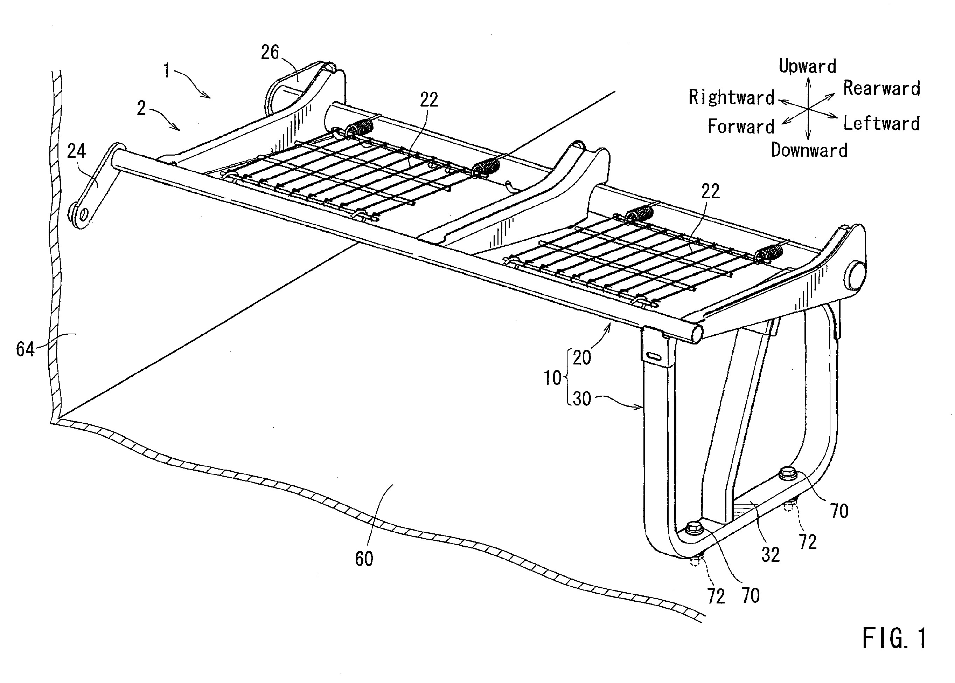

First, Embodiment 1 of the present invention will be described with reference to FIGS. 1 to 3. First, a structure of the right rear seat 1 according to Embodiment 1 will be schematically described with reference to FIG. 1. The right rear seat 1 is a seat for two people and is composed of a seat cushion 2 and a seatback (not shown). Of the seat cushion 2 and the seatback, the seat cushion 2 will be described in detail.

Further, because the seatback may have a well-known structure, a detailed description thereof may be omitted. Further, in FIG. 1, a cushion pad and a seat cover are omitted such that an internal structure of the seat cushion of the right rear seat 1 may be clearly seen. This may apply in Embodiment 2 described below.

The seat cushion 2 is composed of a cushion frame 10, a well-known cushion pad (not shown) attached to the cushion frame 10 while wrapping around the same, and a well-known seat cover (not shown) that covers a surface of the cushion pad. The cushion frame 10 is mainly composed of a frame main body 20 and a leg 30. In the following, the frame main body 20 and the leg 30 will be individually described.

First, the frame main body 20 will be described. The frame main body 20 is a member forming a framework of the seat cushion 2 and is formed as a rectangular frame. The rectangular frame has a plurality of springs 22 --- 22 that are positioned therein so as to extend back and forth thereof. Thus, the seat cushion 2 may be comfortable to sit on for an occupant. Further, the frame main body 20 has brackets 24 and 26 that are respectively secured to front and rear ends thereof in an outer side thereof (a right side in FIG. 1) in order to connect the same to a right inner wall 64 of the vehicle.

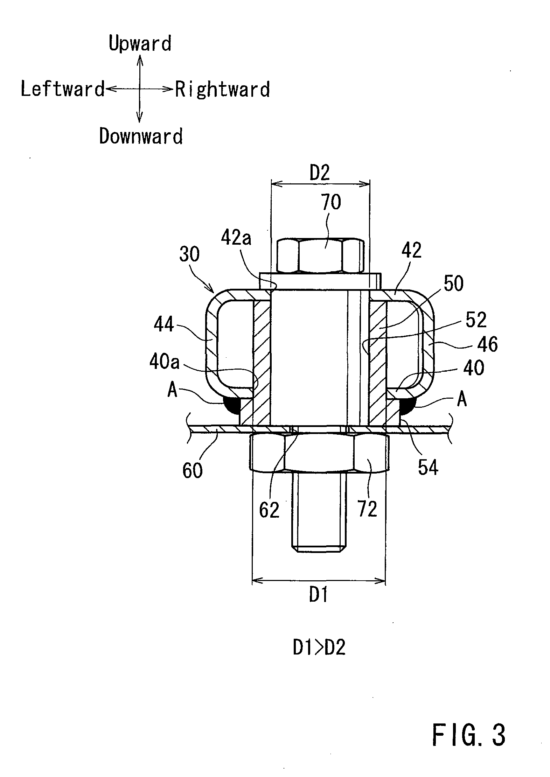

Next, the leg 30 will be described. The leg 30 is a member for connecting the seat cushion 2 to a vehicle floor 60 and is formed so as to have a substantially U-shape. The leg 30 is formed as a substantially rectangular tube that is constructed of a first wall 40, a second wall 42, a third wall 44 and a fourth wall 46 (FIG. 3). Of three sides of the substantially U-shaped leg 30, a side having no free end (a bottom side in FIG. 1 which will be hereinafter referred to as "a base side 32") has a pair of front and rear through-holes 40a and 42a that are formed therethrough in a thickness direction thereof.

That is, the first wall 40 (a lower wall in FIGS. 1 to 3) of the base side 32 has a pair of front and rear mounting holes 40a and 40a that are formed therethrough in a thickness direction thereof. The mounting holes 40a are configured such that bushes 50, which will be hereinafter described, can be inserted thereinto. A diameter of each of the mounting holes 40a may be referred to as "D1."

Further, the second wall 42 (an upper wall in FIGS. 1 to 3) of the base side 32 also has a pair of front and rear mounting holes 42a and 42a that are formed therethrough in a thickness direction thereof. The mounting holes 42a are configured such that bolts 70, which will be hereinafter described, can be inserted thereinto. A diameter of each of the mounting holes 42a may be referred to as "D2". Further, the mounting holes 40a and 42a may be coaxially formed.

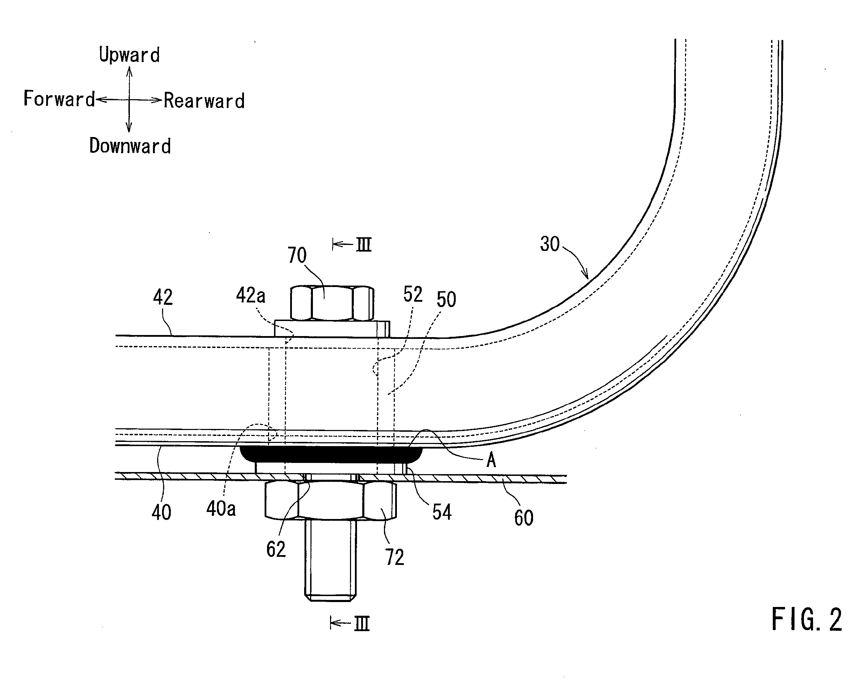

Further, the diameters of the mounting holes 40a and 42a are determined so as to have a relation of "D1 > D2." Therefore, when the other axial end side of each of the bushes 50 (an upper end side in FIGS. 2 and 3 or a side opposite to a side in which a flange 54 is formed) is inserted into each of the mounting holes 40a of the leg 30 until the flange 54 of each of the bushes 50 can be engaged with a periphery of each of the mounting holes 40a, the other end side of each of the bushes 50 can contact a periphery of each of the mounting holes 42a formed in the second wall 42 of the leg 30, which will be hereinafter described.

Each of the bushes 50 will be described in detail. Each of the bushes 50 is formed as a cylindrical metal member having an insertion bore 52 into which each of the bolts 70 can be inserted. The flange 54 is formed in a periphery of one axial end of each of the bushes 50 (a lower end in FIGS. 2 and 3).

An axial length of each of the bushes 50 is set such that when the other axial end side thereof (the upper end side in FIGS. 2 and 3 or the side opposite to the side in which the flange 54 is formed) is inserted into each of the mounting holes 40a of the leg 30 until the flange 54 of each of the bushes 50 can be engaged with the periphery of each of the mounting holes 40a, the other end side can contact an inner surface of the second wall 42 of the leg 30 (the periphery of the mounting hole 42a). Thus, even when the inserted bolts 70 and the nuts 72 are tightly fastened after the bolts 70 are inserted into the insertion bores 52 of the bushes 50, the leg 30 can be prevented from being crushed.

Further, the flange 54 of each of the bushes 50 and the first wall 40 of the leg 30 are bonded to each other by welding in a condition in which the other axial end side of each of the bushes 50 is inserted into each of the mounting holes 40a of the leg 30 until the flange 54 of each of the bushes 50 can be engaged with the periphery of each of the mounting holes 40a, i.e., in a condition in which the other end side contacts the inner surface of the second wall 42 of the leg 30 (the periphery of each of the mounting holes 42a). In FIGS. 2 and 3, a welding portion is shown by "A."

Both of free ends of the leg 30 are respectively connected to front and rear ends of the frame main body 20 in an inner side thereof (a right side in FIG. 1). The right rear seat 1 is constructed of the seat cushion 2 having the cushion frame 10 that is composed of the frame main body 20 and the leg 30, and a well-known seatback.

Next, procedures for mounting the right rear seat 1 in an interior of a vehicle cabin will be described. First, the right rear seat 1 is positioned in a predetermined position in the interior of the vehicle cabin. The predetermined position means a right rear portion in the interior of the vehicle cabin.

Next, both of the brackets 24 and 26 of the frame main body 20 and the right inner wall 64 of the vehicle are respectively fastened together via bolts and nuts (both of which are not shown), so that the brackets 24 and 26 can be connected to the inner wall 64. Further, the term "fastened together" means that the bolt is passed through the bracket 24 (26) and the inner wall 64 and is then fastened by the nut.

Thereafter, similar to the procedure described above, the leg 30 and the vehicle floor 60 are fastened together via the bolts 70 and 70 and the nuts 72 and 72, so that the leg 30 is connected to the vehicle floor 60. That is, the bolts 70 are passed through the mounting holes 40a of the leg 30 and mounting holes 62 formed in the vehicle floor 60 via the mounting holes 42a of the leg 30 and the bolts 70 passed therethrough are then fastened by the nuts 72 from a back side of the vehicle floor 60.

When a fastening operation is thus performed, the second wall 42 of the leg 30 is interleaved between a head portion of each of the bolts 70 and the other axial end side of each of the bushes 50. Further, when such a fastening operation is performed, the flange 54 of each of the bushes 50 are interleaved between the first wall 40 of the leg 30 and the vehicle floor 60. The fastening operation is performed in each of a pair of front and rear positions of the leg 30 (two positions). In this way, the right rear seat 1 is mounted on the interior of the vehicle cabin.

A vehicle seat mounting structure for the right rear seat 1 according to Embodiment 1 of the present invention is constructed as described above. According to the structure, when the leg 30 and the vehicle floor 60 are fastened together via the bolts 70 and the nuts 72, a fastening force is exerted on the second wall 42 of the leg 30, the bushes 50 and the vehicle floor 60. As a result, as described in connection with a conventional structure, the leg 30 can be prevented from being crushed even if the bolts 70 and the nuts 72 are tightly fastened, so that mounting strength of the right rear seat 1 can be increased. At this time, the other axial end side of each of the bushes 50 contacts the inner surface of the second wall 42 of the leg 30 (the periphery of each of the mounting holes 42a). Therefore, in order to secure each of the bushes 50 to the leg 30, only a single welding portion (a welding portion between one axial end side of each of the bushes and the first wall of the leg, i.e., a portion shown by A in FIGS. 2 and 3) is necessary. Thus, unlike the conventional structure, the welding portion can be prevented from being exposed. As a result, an appearance of each of mounting portions of the right rear seat 1 can be prevented from being reduced.

Further, in this structure, the flange 54 of each of the bushes 50 and the first wall 40 of the leg 30 are bonded to each other by welding. Therefore, the right rear seat 1 can be mounted on the vehicle floor 60 while the bushes 50 are secured to the leg 30. Thus, as compared with a case in which such securing is not effected, workability of mounting can be increased.

### (Embodiment 2)

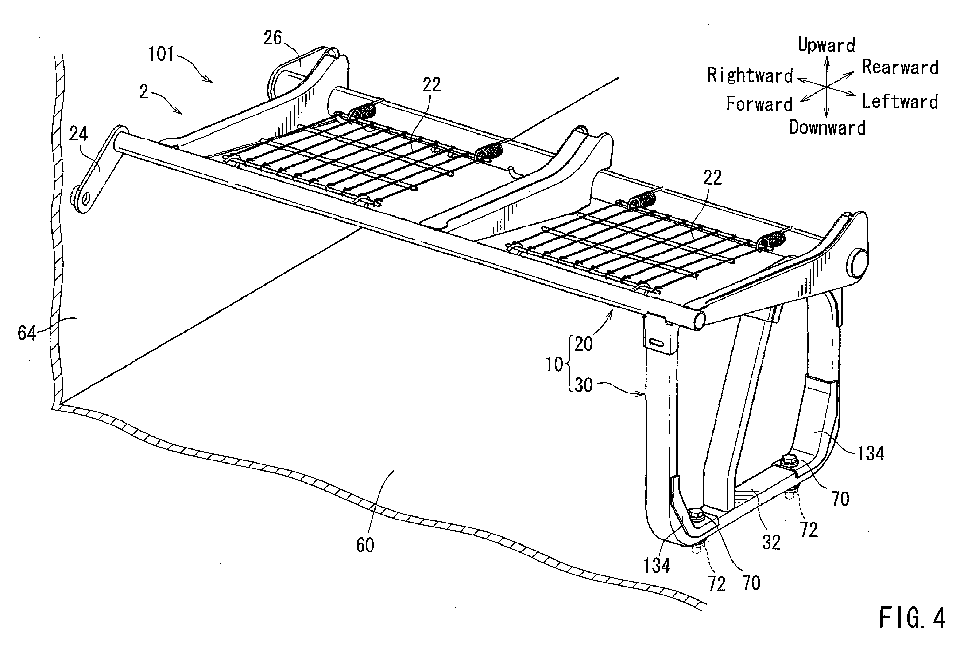

Next, Embodiment 2 of the present invention will be described with reference to FIGS. 4 to 6. Unlike the right rear seat 1 according to Embodiment 1 previously described, in a right rear seat 201 according to Embodiment 2, the substantially U-shaped leg 30 is reinforced in bent portions thereof. Further, the right rear seat 201 according to Embodiment 2 is the same as the right rear seat 1 according to Embodiment 1 except for a reinforcement structure. Therefore, the same elements will be identified by the same reference numerals in the drawings and a detailed description of such elements will be omitted.

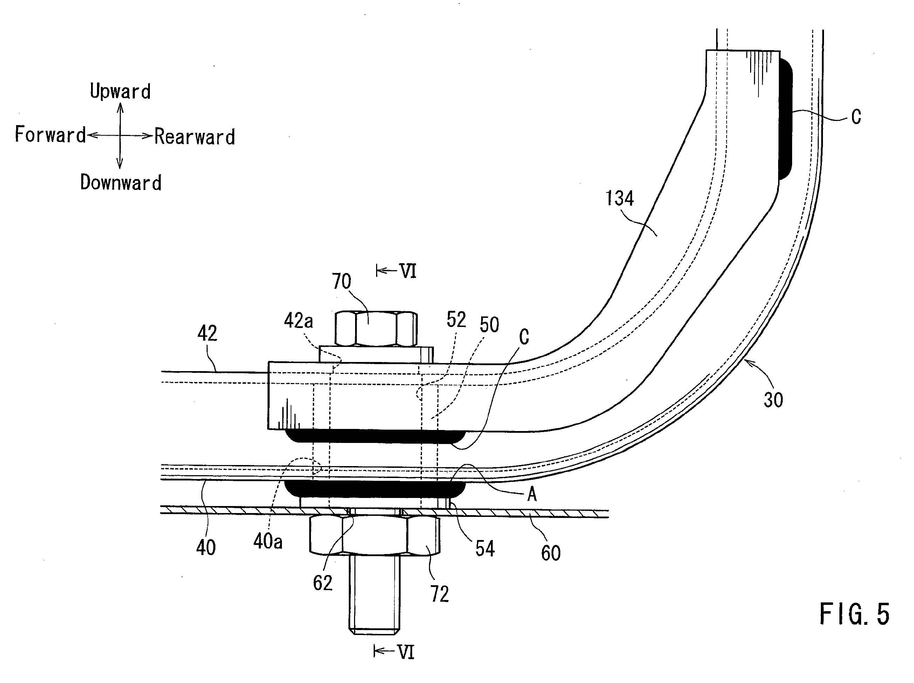

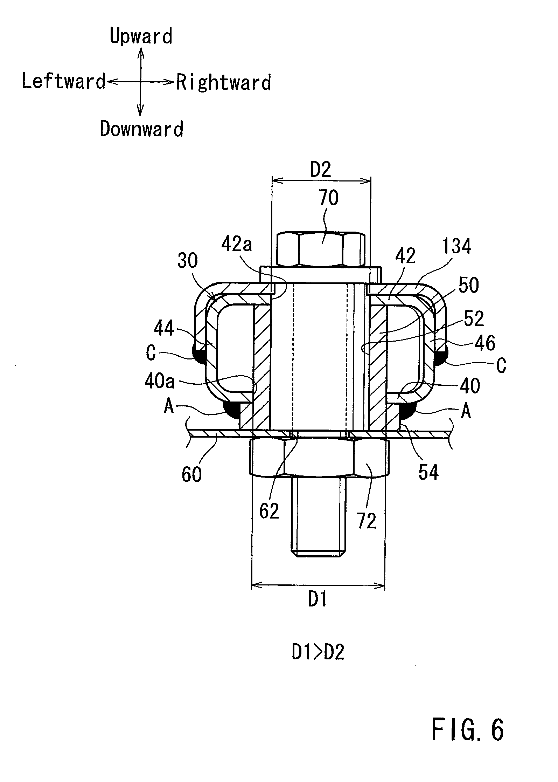

As shown in FIGS. 4 to 6, reinforcing covers 134 and 134 are respectively connected to a surface of the second wall 42 of the substantially U-shaped leg 30 of the right rear seat 201 in the bent portions by welding. In FIGS. 5 and 6, each of welding portions is shown by "C."

A vehicle seat mounting structure for the right rear seat 201 according to Embodiment 2 of the present invention is constructed as described above. Such a structure may have the same effects as the vehicle seat mounting structure for the right rear seat 1 according to Embodiment 1. Further, in the structure, because the reinforcing covers 134 and 134 are used, the leg 30 can be strengthened.

The above description simply relates to embodiments of the present invention. That is, the present invention is not limited to the embodiments described above.

In the embodiments, "the right rear seat 1" of the van type vehicle is exemplified as "the vehicle seat." However, the vehicle seat may be "a left rear seat." In such a case, positions of the brackets 24 and 26 and the leg 30 may be reversed right and left.

## Claims

1. A vehicle seat mounting structure in which a leg (30) is secured to a seat cushion (2) and is formed as a substantially rectangular tube by four walls of a first wall (40), a second wall (42), a third wall (44) and a fourth wall (46), in which the first wall (40) facing a vehicle floor (60) and the second wall (42) facing the first wall (40) are fastened together to the vehicle floor (60) via a bolt (70) and a nut (72), and in which a substantially tubular metal bush (50) capable of preventing the leg (30) from being crushed by the fastening-together action is positioned in the leg (30) in a manner such that the bolt (70) can be inserted thereinto,
**characterized in that**
the bush (50) has a flange (54) that is formed in a periphery of one axial end thereof,
the flange (54) is interleaved between the first wall (40) of the leg (30) and the vehicle floor (60), and
the second wall (42) of the leg (30) is interleaved between a head portion of the bolt (70) and the other axial end of the bush (50).

2. The vehicle seat mounting structure as defined in claim 1, wherein the flange (54) of the bush (50) and the first wall (40) of the leg (30) are bonded to each other by welding.

3. The vehicle seat mounting structure as defined in claim 1 or 2, wherein the other axial end of the bush (50) contacts an inner surface of the second wall (42).

4. The vehicle seat mounting structure as defined in any one of claims 1 to 3, wherein
a reinforcing cover (134) is connected to an outer surface of the second, third, and fourth walls (42, 44, 46), and is interleaved between the head portion of the bolt (70) and the second wall (42); and
the second wall (42) is interleaved between the reinforcing cover (134) and the other axial end of the bush (50).

## Patentansprüche

1. Fahrzeugsitzmontagestruktur, bei der ein Bein (30) an einem Sitzkissen (2) befestigt ist und als eine im Wesentlichen rechteckige Röhre mittels vier Wänden einer ersten Wand (40), einer zweiten Wand (42), einer dritten Wand (44) und einer vierten Wand (46) ausgebildet ist, wobei die erste Wand (40), die dem einem Fahrzeugboden (60) gegenüberliegt, und die zweite Wand (42), die der ersten Wand (40) gegenüberliegt, zusammen über eine Schraube (70) und eine Mutter (72) an dem Fahrzeugboden (60) befestigt sind, und wobei eine im Wesentlichen röhrenförmige Metallhülse (50), die in der Lage ist, zu verhindern, dass das Bein (30) durch die Befestigungstätigkeit zerdrückt wird, in dem Bein (30) derart angeordnet ist, dass die Schraube (70) darin eingeführt werden kann,
**dadurch gekennzeichnet, dass**
die Hülse (50) in einem Umfang eines axialen Endes einen Flansch (54) aufweist,
der Flansch (54) zwischen der ersten Wand (40) des Beins (30) und dem Fahrzeugboden (60) angeordnet ist, und
die zweite Wand (42) des Beins (30) zwischen einem Kopfabschnitt der Schraube (70) und dem anderen axialen Ende der Hülse (50) angeordnet ist.

2. Fahrzeugsitzmontagestruktur nach Anspruch 1, wobei der Flansch (54) der Hülse (50) und die erste Wand (40) des Beins (30) mittels Schweißen miteinander verbunden sind.

3. Fahrzeugsitzmontagestruktur nach Anspruch 1 oder 2, wobei das andere axiale Ende der Hülse (50) eine Innenfläche der zweiten Wand (42) kontaktiert.

4. Fahrzeugsitzmontagestruktur nach einem der Ansprüche 1 bis 3, wobei
eine Verstärkungsabdeckung (134) mit einer Außenfläche der zweiten, dritten und vierten Wand (42, 44, 46) verbunden und zwischen dem Kopfabschnitt der Schraube (70) und der zweiten Wand (42) angeordnet ist; und
die zweite Wand (42) zwischen der Verstärkungsabdeckung (134) und dem anderen axialen Ende der Hülse (50) angeordnet ist.

## Revendications

1. Structure de montage de siège de véhicule dans laquelle un pied (30) est fixé à un coussin de siège (2) et est formé sous forme de tube sensiblement rectangulaire par quatre parois d'une première paroi (40), d'une deuxième paroi (42), d'une troisième paroi (44) et d'une quatrième paroi (46), dans laquelle la première paroi (40) en regard d'un plancher de véhicule (60) et la deuxième paroi (42) en regard de la première paroi (40) sont fixées conjointement au plancher de véhicule (60) via un boulon (70) et un écrou (72), et dans laquelle une bague métallique sensiblement tubulaire (50) capable d'empêcher le pied (30) d'être écrasé par l'action de fixation conjointe est positionnée dans le pied (30) d'une manière telle que le boulon (70) puisse y être inséré,
**caractérisée en ce que**
la bague (50) comporte une bride (54) qui est formée dans une périphérie d'une extrémité axiale de celle-ci,
la bride (54) est intercalée entre la première paroi (40) du pied (30) et le plancher de véhicule (60), et
la deuxième paroi (42) du pied (30) est intercalée entre une portion de tête du boulon (70) et l'autre extrémité axiale de la bague (50).

2. Structure de montage de siège de véhicule selon la revendication 1, dans laquelle la bride (54) de la bague (50) et la première paroi (40) du pied (30) sont liées l'une à l'autre par soudage.

3. Structure de montage de siège de véhicule selon la revendication 1 ou 2, dans laquelle l'autre extrémité axiale de la bague (50) vient en contact avec une surface interne de la deuxième paroi (42).

4. Structure de montage de siège de véhicule selon l'une quelconque des revendications 1 à 3, dans laquelle
un capot de renforcement (134) est raccordé à une surface externe des deuxième, troisième et quatrième parois (42, 44, 46), et est intercalé entre la portion de tête du boulon (70) et la deuxième paroi (42) ; et
la deuxième paroi (42) est intercalée entre le capot de renforcement (134) et l'autre extrémité axiale de la bague (50).
